# EUROPEAN PATENT SPECIFICATION

(11) **EP 0 338 649 B1**
(45) Date of publication and mention of the grant of the patent: **11.01.1995**
(21) Application number: 89201003.4
(22) Date of filing: 19.04.1989
(51) Int. Cl.: A01D 34/66, A01D 43/10

(54) **A mowing machine**
Mähmaschine
Faucheuse

(30) Priority: 21.04.1988 NL 8801039
(43) Date of publication of application: 25.10.1989
(60) Divisional application: 94201496.0
(73) Proprietor: MAASLAND N.V., 3155 PD Maasland (NL)
(72) Inventor: Koorn, Maarten, NL-3131 JC Vlaardingen (NL); Sikkema, Sape, NL-3143 CP Maassluis (NL)
(74) Representative: Mulder, Herman

(56) References cited:
- EP-A- 0 009 134
- EP-A- 0 068 560
- EP-A- 0 118 952
- EP-A- 0 177 091
- EP-A- 0 242 311
- EP-A- 0 251 409
- EP-A- 0 267 659
- WO-A-81/02966
- FR-A- 2 171 674
- GB-A- 2 089 634

## Description

The present invention relates to a mowing machine comprising a cutter bar which extends substantially transversely to the direction of operative travel over the field and rotary mowing members arranged thereabove, which cutter bar is connected for its support in at least two places to a carrier frame, at least one of which connections includes a resilient element which permits of a limited relative movement between the carrier frame and the portion of the cutter bar that is contiguous to the connection, the resilient element being provided with plate-shaped material which extends in a substantially vertical plane located in the direction of operative travel to permit mainly movements of the cutter bar relative to the carrier frame in a substantially vertical plane transversely to the direction of operative travel.

By connecting the cutter bar to the carrier frame in at least two places there is obtained a framework which to a high extent absorbs the forces acting on the cutter bar in a direction opposite to the direction of operative travel of the mowing machine. On the other hand, the cutter bar, in particular when it is relatively long, is subjected to forces which are directed upwardly in a vertical plane and may cause deformation thereof. This deformation results in an increased tension in the positions where the said connections to the cutter bar and the carrier frame are provided, i.e. by the occurrence there of bending moments and forces acting in the longitudinal direction of the cutter bar. The results thereof may manifest themselves in an unwanted wear of the transmission system which passes through the cutter bar and is required for driving the mowing members. So as to obviate these unwanted phenomena at least partly, it is known to provide one of the connections with a pivotable element having a pivot shaft extending in the direction of operative travel of the mowing machine. This measure, however, does not provide the desired tension relief of the said connections.

A mowing machine as described in the opening paragraph is known from EP-A-0 068 560 and EP-A-0 118 952.

EP-A-0 068 560 discloses a cutter bar mounted to a subframe. The structure of cutter bar and subframe is attached to a carrier frame at one end by means of a pivot and at the other end by means of a pressure member. The pressure member is adjustable in order to provide the desired ground pressure for the cutter bar when the machine is in operation. Although the mowing machine in EP-A-0 068 560 permits the cutter bar to pivot in response to uneven terrain, it does so at the expense of overall frame rigidity. The end of the sub frame that is connected to the carrier frame by means of the pressure member provides little overall structural strength to the mowing machine, thereby subjecting this machine to increased forces parallel to its direction of operative travel. A solution for the above described deformation problems cannot be borrowed from EP-A-0 068 560.

EP-A-0 118 952 discloses a cutter bar mounted to a carrier frame by means of side plates and a downwardly descending drive shaft at one end of the mowing machine and an upwardly ascending shaft at the other end. Both shafts are provided with ball joints and have intermediate shafts consisting of synthetic resin. Therefore, they are flexible in all directions. The frame rigidity is obtained by means of the side plates; as these plates are carrying a conditioner, they must be of such a strength, that any flexibility as required to solve the above problem fails.

To overcome the above-mentioned problems, the invention gives the solution that the resilient element effects the connection via a mowing member arranged on the cutter bar. The resilient element renders it possible to reduce to a significant extent not only the bending moments occurring in the connections but also the forces acting in the longitudinal direction of the cutter bar. Furthermore, the framework to a sufficient extent retains the possibility of absorbing the forces exerted in a direction opposite to the direction of operative travel.

In a special embodiment, the cutter bar is connected to the carrier frame in two positions via different mowing members, e.g. the two outermost ones. More specifically, one or more mower members is/are provided with a substantially drum-shaped crop guide, a connection between the cutter bar and the carrier frame then extending via or through a crop guide.

In particular, the resilient element consists of a metal plate, e.g. a leaf spring having a thickness of 3 to 4 mms, which is connected near its upper edge to the carrier frame and near its lower edge to members attached to the cutter bar.

In a further embodiment according to the invention, the resilient element extends at least partly within a substantially drum-shaped crop guide disposed on a mowing member. In particular, the resilient element, which near its upper end is connected to the carrier frame, is connected near its lower end of a stationary supporting member arranged within a rotating crop guide. This supporting member is then connected to the relevant mowing member in such a manner that it is supported rotatably relative thereto. The supporting member is provided with a cover disposed substantially over the drum, which cover has a central aperture through which the resilient element extends. Between the cover and the carrier frame there extends a flexible sleeve, within which the resilient element and/or its connection means extends/extend.

In a preferred embodiment there is not only provided between the cutter bar and the carrier frame at least one connection having a resilient element, but the cutter bar is also connected in at least one position to the carrier frame via a pivot, whose pivot shaft extends substantially horizontally in the direction of operative travel of the mowing machine. This accomplishes a further stress relief of the places in which the connections to the cutter bar and the carrier frame are disposed. The carrier frame can be connected to a mowing member via this pivot.

The mowing members are drivingly interconnected via the cutter bar and are driven via a drive shaft which is connected to one of the mowing members, preferably an outermost one. The drive shaft is located at least partly within a substantially drum-shaped crop guide arranged on the relevant mowing member. The carrier frame is connected via the pivot to the mowing member which is driven by the drive shaft. In the region of the pivot shaft, the drive shaft is provided with a flexible coupling, e.g. a chain coupling or a universal joint. In a practical embodiment, the drive shaft is bearing-supported above the flexible coupling in a portion which is rigidly connected to the carrier frame and the drive shaft is bearing-supported below the flexible coupling in a pivot member which is pivotable about the pivot shaft relative to the carrier frame. This pivot member is located at least partly within a substantially drum-shaped crop guide arranged on the relevant mowing member. The pivot member is fitted with a cover located over the drum and is closely contiguous thereto.

As has already been stated in the foregoing, the carrier frame may be connected via the pivot to the mowing member which is driven by the drive shaft. This is not only possible by providing the drive shaft with a flexible coupling in the region of the pivot shaft and by supporting the drive shaft under the flexible coupling in a pivot member capable of pivotal movement about the pivot shaft relative to the carrier frame, but, for example, also by supporting the drive shaft - without a flexible coupling - in a sleeve-shaped member which is rigidly connected to e.g. a transmission system box from which, via the drive shaft, the drive of the mowing members is effected, the carrier frame then being connected to this sleeve-shaped member via the pivot. In this embodiment, it is preferred to drive the input shaft of the transmission system via one or more belts.

The mowing machine disclosed here can be moved by a tractor both as a side-mounted and as a front-mounted machine. The carrier frame of the mowing machine can alternatively be suspended from a frame with wheels; the mowing machine can then co-operate with a crusher which is also suspended from this frame. In a special embodiment of the invention, the connection between the carrier frame and the cutter bar can extend via the crusher, the resilient element then being arranged between the crusher and the cutter bar.

In what follows, therefore, the invention relates to a mower-crusher comprising a cutter bar which extends substantially transversely to the direction of operative travel over the field and mowing members arranged thereabove, which cutter bar is connected for its support in at least two places to a carrier frame which is suspended from a frame, with the aid of which the mower-crusher is connected to a tractor, a crusher device also being suspended from the said frame. According to the invention, the mower-crusher is of such a construction that the connection between the carrier frame and the cutter bar is effected via the crusher device, while a resilient element is arranged between the crusher device and the cutter bar. In particular, the resilient element can be constituted by a spring steel plate arranged between the lower end or a point near the lower end of the crusher device and the cutter bar. This mower-crusher, too, may be of such a structure that it can be moved by a tractor both as a side-mounted and a front-mounted machine.

For a better understanding of the present invention and to show how the same may be carried into effect, reference will now be made, by way of example, to the accompanying drawings of some embodiments, in which drawings:
Figure 1 is a plan view of a first embodiment of a mower-crusher;
Figure 2 is a partial rear view of the mower-crusher of Figure 1;
Figure 3 is a side view of the mower-crusher of Figure 1;
Figures 4 and 5 are cross-sectional views of a first connection between the carrier frame and the cutter bar of the mowing unit in the mower-crusher of Figure 1;
Figure 6 is a cross-sectional view of a second connection between the carrier frame and the cutter bar of the mowing unit in the mower-crusher of Figure 1;
Figure 7 is a schematic front view of a first embodiment of a front-mounted mowing machine according to the invention.

In the various drawings, which only show the implement schematically, corresponding components are denoted by the same reference numerals.

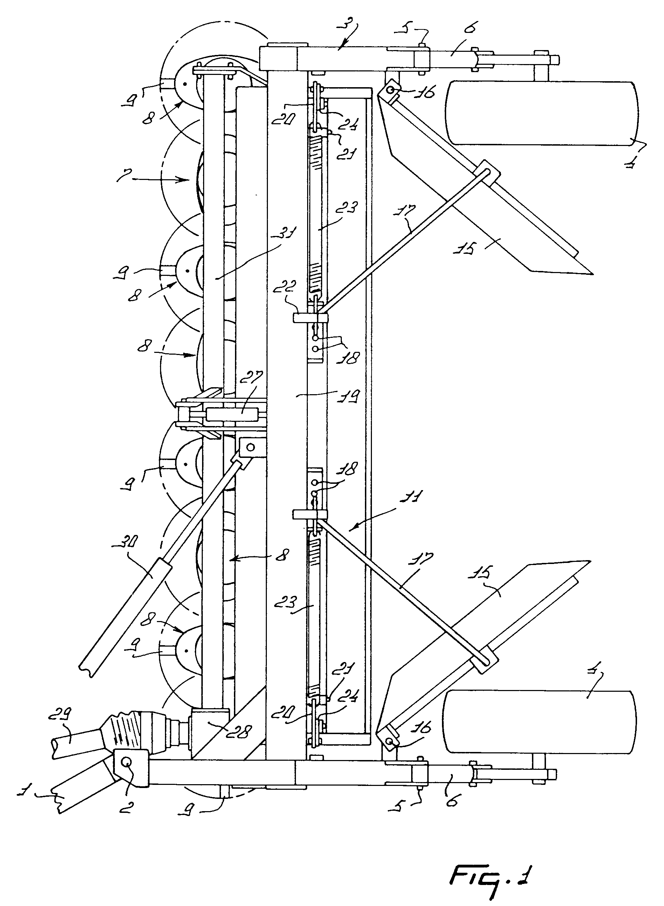

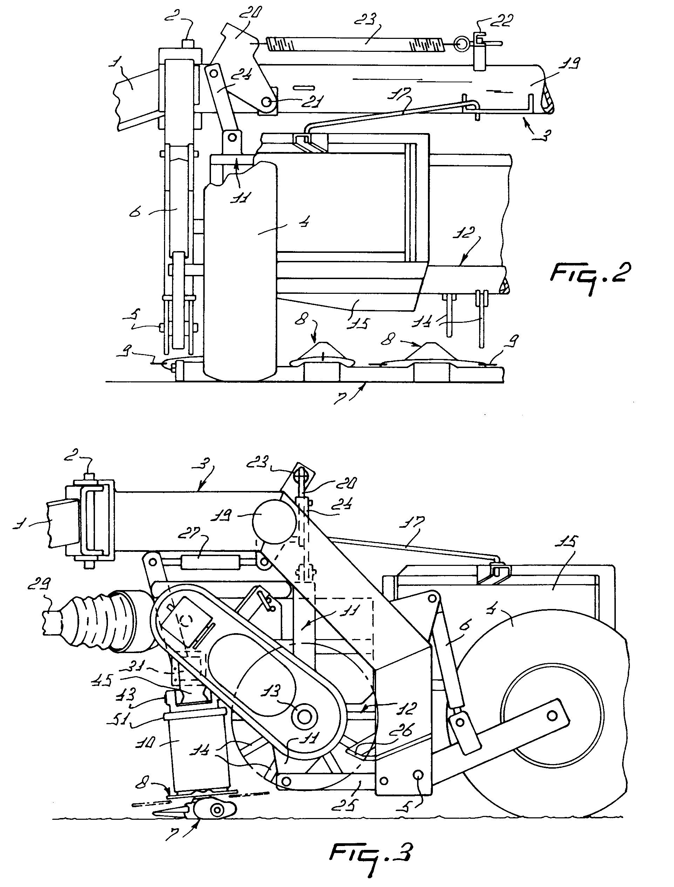

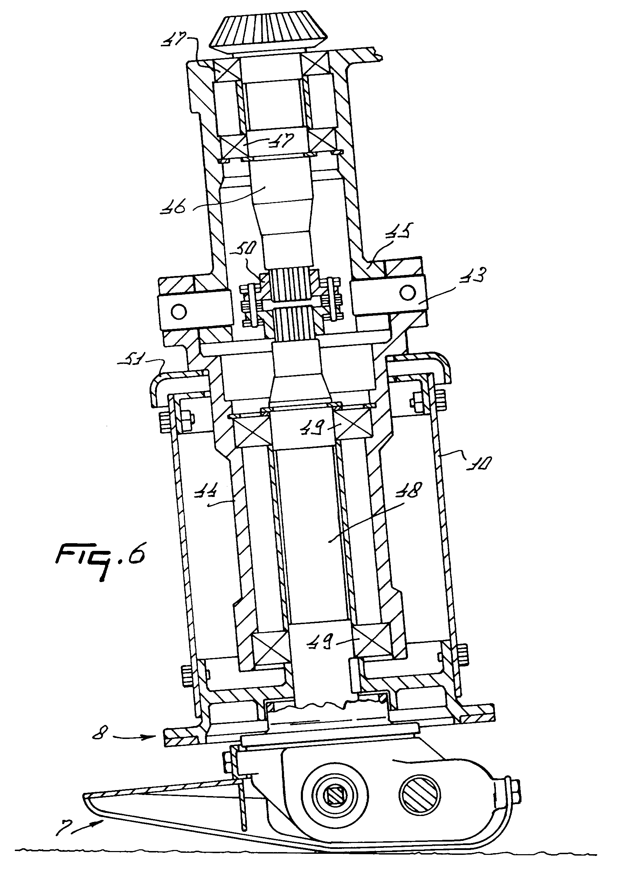

The mower-crusher, as shown in plan view (Figure 1), in side view (Figure 3) and in partial rear view (Figure 2), is provided with a pivotal arm 1, by means of which it can be connected to a tractor. Via a pivot 2 the pivotal arm 1 is connected to a first frame 3 which is supported drivably by means of wheels 4. The wheels 4 are pivotably connected to the first frame 3 by means of pivots 5. The pivotal movement of each of the wheels relative to the first frame 3 is effected by means of a hydraulic cylinder 6.

The machine furthermore includes a cutter bar, constituted by a supporting beam 7, with mowing members 8. The mowing members 8 are disc-shaped, are provided at their outer periphery with blades 9 and are capable of rotation around upwardly directed shafts. The drive of the mowing members 8 is accommodated in the supporting beam 7. The two outermost mowing members are provided with drum-shaped crop guides 10 which rotate together with the said mowing members.

The mower-crusher includes a second frame 11, in which a crusher device 12 is fitted. In substance, this crusher device 12 is constituted by a horizontally extending tube 13, to which crusher members 14 are arranged. The tube 13 together with the crusher members 14 is capable of rotating around its longitudinal axis, i.e. in such a manner that the front side moves upwardly. Consequently, the crop mown by the mowing unit is seized by the crusher members 14, which discharge the crop upwardly and rearwardly; during this upward and rearward movement the crusher members 14 advantageously process the crop.

In order to collect the crop displaced rearwardly by the crusher device 12 into a swath having a smaller width than that of the mowing machine, two swath boards 15 are arranged in the first frame 3. The swath boards 15 are arranged pivotably in the first frame 3 about vertical shafts 16 (Figure 1). The angle at which the swath board 15 is arranged can be set by connecting the rod 17 to the first frame 3 in different positions. A plurality of apertures 18 (Figure 1) are provided for the purpose. The swath boards include substantially vertical sections and sections that are folded obliquely downwardly and forwardly, so that the crop discharged rearwardly by the crusher device 12 is led towards the swath to be formed in an optimum manner.

The second frame 11 is suspended from the first frame 3 in such a manner that it is movable in the vertical direction. This suspension will be explained in detail with reference to Figure 2, in which drawing the suspension means are shown at one side only. At the portion 19 of the first frame 3 a tilting element 20 is pivotable about a horizontal shaft 21 which extends substantially in the direction of operative travel of the mower-crusher. Between the tilting element 20 and a support 22 mounted on the portion 19 there is arranged a tension spring 23 which compensates the force exerted on the tilting element 20 by a tensile member 24. The tensile member 24, which has one end connected to the tilting element 20, has its other end connected pivotably to the second frame 11. In this manner, the lateral force exerted by the tension spring 23 is converted into an upwardly directed force on the second frame 11. The second frame 11 is furthermore movably connected to the first frame 3 by means of lower pivotal members 25 (Figure 3), which are connected pivotably to both the second frame 11 and the first frame 3. The vertically movable second frame 11 is limited in its upward movement in that the lower pivotal members abut against a stop 26. The second frame 11 is furthermore movably connected to the first frame 3 by means of an upper pivotal member 27, which also is connected pivotably to both the second frame 11 and the first frame 3. This upper pivotal member 27 is adjustable in length. By adjusting the length of the upper pivotal member, it is possible to alter the position of the second frame 11 relative to the first frame 3. For example, when the length of the upper pivotal member is reduced, then the position in which the tensile member 24 acts on the second frame 11 is slightly moved to the rear relative to the pivot shaft, by means of which the lower pivotal members 25 are connected to the second frame 11; the tensile member is then moved slightly downwards and also slightly towards the rear.

The second frame 11 accommodates a gear box 28 (Figure 1). Inside the gear box 28, the main drive shaft 29 coming from the tractor is connected both to the drive of the mower members on the cutter bar and to the drive of the crusher device.

Furthermore, in Figure 1 is shown a hydraulic cylinder 30, one end of which is connected pivotably to the pivotal arm 1 and the other end to the first frame 3. By controlling the length of the hydraulic cylinder 30, it is possible to adjust the pivotal angle of the pivotal arm 1 with respect to the mower-crusher.

In addition, it should be noted that the mower-crusher shown in Figures 1, 2 and 3 is provided with protection screens (not shown). These protection screens consist of metal frames, across which there is arranged a plastic-coated cloth or any other type of flexible material which hangs down all around.

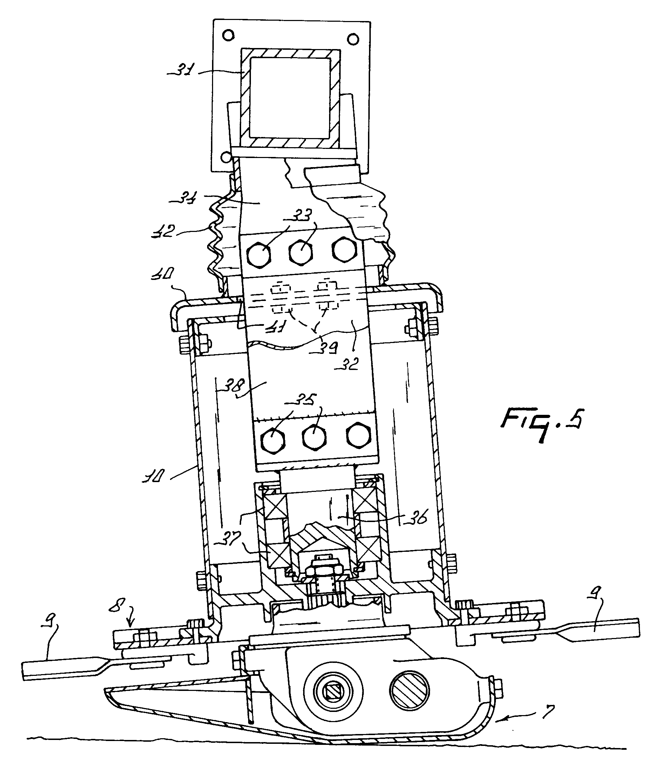

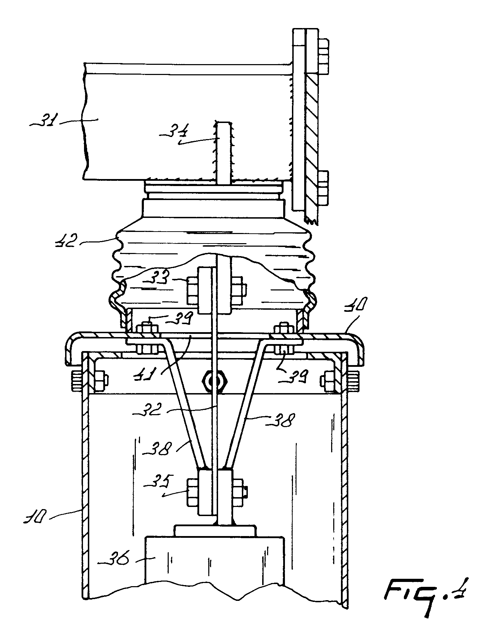

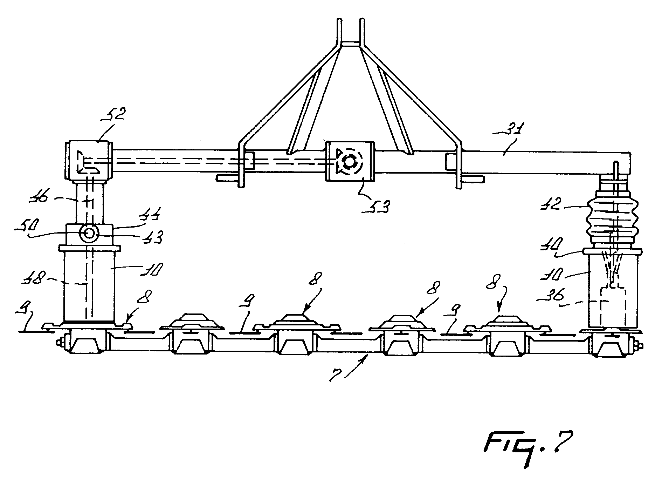

The mowing unit of the mower-crusher or, when the crusher device is lacking, the mowing machine includes a cutter beam which, as has been stated in the foregoing, is constituted by the supporting beam 7, and superjacent mowing members 8, a carrier frame 31 (Figures 1 and 3) and two connections between the cutter bar and the carrier frame, which connections in the embodiment shown in Figures 1 to 3 are effected via the two outermost mowing members, both of which are provided with a substantially drum-shaped crop guide. The manner in which the first connection is effected is shown in Figures 4 and 5, while the manner in which the second connection is effected is shown in Figure 6.

In Figures 4 and 5, the connection between the supporting beam 7 and the carrier frame 31 includes a resilient element 32 which is designed here as a metal plate which near its upper edge is connected to the carrier frame 31 by means of bolts 33 and a connection plate member 34, and near its lower edge to a supporting member 36 by means of the bolts 35. The resilient element 32 extends in a plane located in the direction of operative travel. The supporting member 36 is bearing-supported in the relevant mowing member 8 by means of bearings 37. The resilient element 32 is located partly within the drum-shaped crop guide 10 arranged on the mowing member 8. Furthermore, connection plate members 38 are bolted to the supporting member 36 by means of the bolts 35; these connection plate members themselves are bolted by means of bolts 39 to a cover 40 for the drum-shaped crop guide 10. The cover 40 has a central aperture 41, through which the resilient element 32 extends. A flexible sleeve 42 extends between the cover 40 and the carrier frame 31. The resilient element 32 and its connection means 33, 34 to the carrier frame 31 extend within this sleeve 42. The resilient element 32 allows of both a slight bending and a slight shift of the supporting beam 7 relative to the carrier frame 31 in a vertical plane transversely to the direction of operative travel.

In Figure 6 the connection between the supporting beam 7 and the carrier frame 31 includes a pivot 43 whose pivot shaft extends horizontally in the direction of operative travel. A pivotal member 44 is pivotable about the pivot shaft relative to a member 45 which is rigidly connected to the carrier frame 31. The drive shaft for the mowing members 8 in the supporting beam 7 extends through the member 45 and the pivotal member 44. The upper portion 46 of the drive shaft is bearing-supported in the member 45 by means of bearings 47. The lower portion 48 of the drive shaft is bearing-supported in the pivotal member 44 by means of bearings 49. The upper portion 46 of the drive shaft is connected to the lower portion 48 thereof by means of a flexible coupling 50, e.g. a chain coupling or a universal joint, which is arranged in the region of the shaft of the pivot 43. The pivotal member 44 is arranged partly within the drum-shaped crop guide 10 disposed on the relevant mowing member 8. A cover 51 is rigidly connected to the pivotal member, which cover is located over this drum-shaped crop guide and is tightly contiguous thereto.

The invention as it has been described so far is not only suitable for use in a mowing machine or in a mower-crusher which, as is apparent from Figures 1 to 3, is moved by a tractor as a side-mounted machine but also in a front-mounted mower or front-mounted mower-crusher. The use in a front-mounted mowing machine is shown in Figure 7. The second connection (Figure 7) between the supporting beam 7 and the carrier frame 31 extends via the gear box 52, while a second gear box 53 is arranged halfway in the carrier frame. The mowing members 8 are driven by a transmission system which extends from the power take-off shaft of the tractor via the gear box 53, one half of the carrier frame 31, the gear box 52, the member 45 and the pivotal member 44 to the relevant outermost mowing member and from there to the further mowing members 8. The resilient element 32 is included in the first connection between the carrier frame 31 and the supporting beam 7, while the second connection between the carrier frame 31 and the supporting beam 7 includes the pivot shaft 43 with the flexible coupling 50 in the drive shaft.

Finally, it should be noted that the invention is not limited to the above-described embodiments; many modifications can be provided without departing from the scope of the claims. Thus, it is possible e.g. to combine the disclosed front-mounted mowers with a crusher and to use the framework formed by the cutter bar, the carrier frame and the specific interconnections as described in various types of rotary disc-mowers.

## Claims

1. A mowing machine comprising a cutter bar (7) which extends substantially transversely to the direction of operative travel over the field and rotary mowing members (8) arranged thereabove, which cutter bar (7) is connected for its support in at least two places to a carrier frame (31), at least one of which connections includes a resilient element (32) which permits of a limited relative movement between the carrier frame (31) and the portion of the cutter bar (7) that is contiguous to the connection, the resilient element (32) being provided with plate-shaped material extending in a substantially vertical plane located in the direction of operative travel to permit movements of the cutter bar (7) relative to the carrier frame (31) in a substantially vertical plane transversely to the direction of operative travel, characterized in that the resilient element (32) effects the connection via a mowing member (8) arranged on the cutter bar (7).

2. A mowing machine as claimed in claim 1, characterized in that the cutter bar (7) is connected to the carrier frame (31) in two places via different, preferably the two outermost, mowing members (8) of the cutter bar (7).

3. A mowing machine as claimed in any one of the preceding claims, characterized in that one or more mowing members (8) includes/include a substantially drum-shaped crop guide (10), and that a connection between the cutter bar (7) and the carrier frame (31) extends via or through a crop guide (10).

4. A mowing machine as claimed in any one of the preceding claims, characterized in that the resilient element (32) consists of a metal plate, preferably a leaf spring having a thickness of 3 to 4 mms, which is connected near its upper edge to the carrier frame (31) and near its lower edge to members attached to the cutter bar (7).

5. A mowing machine as claimed in any one of the preceding claims, characterized in that the resilient element (32), which near its upper end is connected to the carrier frame (31), is connected near its lower end to a stationary supporting member (36) arranged within a rotating crop guide (10) and connected to the relevant mowing member (8) in such a manner that it is supported rotatably relative thereto.

6. A mowing machine as claimed in claim 5, characterized in that the supporting member (36) is provided with a cover (40) disposed substantially over the drum-shaped crop guide (10), which cover (40) has a central aperture (41) through which the resilient element (32) extends.

7. A mowing machine as claimed in claim 6, characterized in that between the cover (40) and the carrier frame (31) there extends a flexible sleeve (42), within which the resilient element (32) and/or its connection means (33, 34) extends/extend.

8. A mowing machine as claimed in any one of the preceding claims, characterized in that the carrier frame (31) is connected to a mowing member (8) via a pivot (43; 59), whose pivot shaft extends substantially horizontally in the direction of operative travel of the mowing machine.

9. A mowing machine as claimed in claim 8, characterized in that the mowing members (8) are drivingly inter-connected via the cutter bar (7) and are driven via a drive shaft (46, 48) connected to, preferably, an outermost mowing member (8), which drive shaft (46, 48) is located at least partly within a substantially drum-shaped crop guide (10) arranged on the relevant mowing member (8).

10. A mowing machine as claimed in claim 9, characterized in that the carrier frame (31) is connected via the pivot (43; 59) to the mowing member (8) which is driven by the drive shaft (46, 48).

11. A mowing machine as claimed in claim 10, characterized in that the drive shaft (46, 48) is provided with a flexible coupling (50), preferably a chain coupling or a universal joint, in the region of the pivot shaft.

12. A mowing machine as claimed in claim 11, characterized in that the drive shaft (46, 48) is bearing-supported above the flexible coupling (50) in a portion (45) which is rigidly connected to the carrier frame (31), and in that the drive shaft (46, 48) is bearing-supported below the flexible coupling (50) in a pivot member (44) which is pivotable about the pivot shaft relative to the carrier frame (31).

13. A mowing machine as claimed in claim 12, characterized in that the pivot member (44) is located at least partly within a substantially drum-shaped crop guide (10) arranged on the relevant mowing member (8) and fitted with a cover (51) located over the drum-shaped crop guide (10).

14. A mowing machine as claimed in claim 8, 9 or 10, characterized in that the drive shaft is supported in a sleeve-shaped member (58), to which the carrier frame (31) is connected via the pivot (59), which sleeve-shaped member (58) furthermore is rigidly connected to a transmission system box (61) from which the drive of the mowing members (8) is effected via the drive shaft.

15. A mowing machine as claimed in claim 14, characterized in that the input shaft (63) of the transmission system is driven by means of one or more belts (64).

16. A mowing machine as claimed in any one of the preceding claims, characterized in that the carrier frame (31) is suspended from a frame (3), via which the mowing machine is connected to a tractor.

17. A mowing machine as claimed in any one of the preceding claims, characterized in that the carrier frame (31) is suspended from a frame (3) which is provided with wheels (4).

18. A mowing machine as claimed in claim 16 or 17, characterized in that it co-operates with a crusher device (12) suspended from the frame (3).

## Patentansprüche

1. Mähmaschine mit einem sich im wesentlichen quer zur Arbeitsrichtung erstreckenden Mähbalken (7) und über ihm angeordneten rotierenden Mähgliedern (8), wobei der Mähbalken (7) zwecks Abstützung an mindestens zwei Stellen mit einem Tragrahmen (31) verbunden ist, wobei mindestens eine der Verbindungen ein elastisches Element (32) aufweist, das eine begrenzte relative Bewegung zwischen dem Tragrahmen (31) und dem zu der Verbindung gehörigen Teil des Mähbalkens (7) ermöglicht, und wobei das elastische Element (32) eine Platte aufweist, die sich in einer im wesentlichen vertikalen, in Arbeitsrichtung verlaufenden Ebene erstreckt und Bewegungen des Mähbalkens (7) relativ zu dem Tragrahmen (31) in einer im wesentlichen vertikalen, quer zur Arbeitsrichtung verlaufenden Ebene ermöglicht,
dadurch gekennzeichnet, daß das elastische Element (32) die Verbindung über ein an dem Mähbalken (7) angeordnetes Mähglied (8) herstellt.

2. Mähmaschine nach Anspruch 1,
dadurch gekennzeichnet, daß der Mähbalken (7) mit dem Tragrahmen (31) an zwei Stellen über unterschiedliche, vorzugsweise über die beiden äußeren Mähglieder (8) des Mähbalkens (7) verbunden ist.

3. Mähmaschine nach einem der vorhergehenden Ansprüche,
dadurch gekennzeichnet, daß ein oder mehrere Mähglieder (8) eine im wesentlichen trommelförmige Gutführung (10) aufweisen, und daß sich eine Verbindung zwischen dem Mähbalken (7) und dem Tragrahmen (31) über eine Gutführung (10) oder durch sie hindurch erstreckt.

4. Mähmaschine nach einem der vorhergehenden Ansprüche,
dadurch gekennzeichnet, daß das elastische Element (32) aus einer Metallplatte, vorzugsweise aus einer Blattfeder mit einer Dicke von 3 bis 4 mm besteht, die nahe ihrer oberen Kante mit dem Tragrahmen (31) und nahe ihrer unteren Kante mit an dem Mähbalken (7) angeordneten Teilen verbunden ist.

5. Mähmaschine nach einem der vorhergehenden Ansprüche,
dadurch gekennzeichnet, daß das nahe seinem oberen Ende mit dem Tragrahmen (31) verbundene elastische Element (32) nahe seinem unteren Ende mit einem feststehenden Stützglied (36) verbunden ist, das innerhalb einer rotierenden Gutführung (10) angeordnet und mit dem zugehörigen Mähglied (8) derart verbunden ist, daß es relativ zu diesem drehbar gelagert ist.

6. Mähmaschine nach Anspruch 5,
dadurch gekennzeichnet, daß das Stützglied (36) eine im wesentlichen über der trommelförmigen Gutführung (10) angeordnete Abdeckung (40) mit einer Mittelöffnung (41) aufweist, durch welche das elastische Element (32) hindurchgeführt ist.

7. Mähmaschine nach Anspruch 6,
dadurch gekennzeichnet, daß zwischen der Abdeckung (40) und dem Tragrahmen (31) eine flexible Manschette (42) vorgesehen ist, in die hinein sich das elastische Element (32) und/oder seine Verbindungsglieder (33, 34) erstrecken.

8. Mähmaschine nach einem der vorhergehenden Ansprüche,
dadurch gekennzeichnet, daß der Tragrahmen (31) mit einem Mähglied (8) über ein Gelenk (43) verbunden ist, dessen Achse im wesentlichen horizontal in Arbeitsrichtung der Mähmaschine ausgerichtet ist.

9. Mähmaschine nach Anspruch 8,
dadurch gekennzeichnet, daß die Mähglieder (8) über den Mähbalken (7) miteinander antriebsverbunden und über eine Antriebswelle (46, 48) angetrieben sind, die vorzugsweise mit einem äußeren Mähglied (8) verbunden und zumindest teilweise in einer an dem zugehörigen Mähglied (8) vorgesehenen, im wesentlichen trommelförmigen Gutführung (10) angeordnet ist.

10. Mähmaschine nach Anspruch 9,
dadurch gekennzeichnet, daß der Tragrahmen (31) über das Gelenk (43) mit dem von der Antriebswelle (46, 48) angetriebenen Mähglied (8) verbunden ist.

11. Mähmaschine nach Anspruch 10,
dadurch gekennzeichnet, daß die Antriebswelle (46, 48) im Bereich der Schwenkachse eine flexible Kupplung (50), vorzugsweise eine Bolzenkupplung oder ein Universalgelenk aufweist.

12. Mähmaschine nach Anspruch 11,
dadurch gekennzeichnet, daß die Antriebswelle (46, 48) oberhalb der flexiblen Kupplung (50) in einem Teil (45) gelagert und abgestützt ist, das mit dem Tragrahmen (31) starr verbunden ist, und daß die Antriebswelle (46, 48) unterhalb der flexiblen Kupplung (50) in einem Schwenkglied (44) gelagert und abgestützt ist, das relativ zu dem Tragrahmen (31) um die Schwenkachse schwenkbar ist.

13. Mähmaschine nach Anspruch 12,
dadurch gekennzeichnet, daß das Schwenkglied (44) zumindest teilweise innerhalb einer an dem zugehörigen Mähglied (8) vorgesehenen, im wesentlichen trommelförmigen Gutführung (10) angeordnet und mit einer über der trommelförmigen Gutführung (10) angeordneten Abdeckung (51) versehen ist.

14. Mähmaschine nach den Ansprüchen 8, 9 oder 10,
dadurch gekennzeichnet, daß die Antriebswelle in einem hülsenförmigen Element abgestützt ist, das über das Gelenk mit dem Tragrahmen (31) verbunden und ferner mit einem Getriebegehäuse starr verbunden ist, durch dessen Antriebswelle die Mähglieder (8) angetrieben sind.

15. Mähmaschine nach Anspruch 14,
dadurch gekennzeichnet, daß die Eingangswelle des Getriebes mittels eines oder mehrerer Riemen angetrieben wird.

16. Mähmaschine nach einem der vorhergehenden Ansprüche,
dadurch gekennzeichnet, daß der Tragrahmen (31) an einem Gestell (3) aufgehängt ist, über welches die Mähmaschine an einen Schlepper angeschlossen ist.

17. Mähmaschine nach einem der vorhergehenden Ansprüche,
dadurch gekennzeichnet, daß der Tragrahmen (31) an einem Gestell (3) aufgehängt ist, das Räder (4) aufweist.

18. Mähmaschine nach Anspruch 16 oder 17,
dadurch gekennzeichnet, daß die Mähmaschine mit einer an dem Gestell (3) aufgehängten Quetschvorrichtung (12) zusammenwirkt.

## Revendications

1. Machine faucheuse comprenant une barre de coupe (7) qui s'étend substantiellement transversalement au sens de marche du travail sur le terrain et des organes faucheurs rotatifs (8) disposés au dessus de ladite barre de coupe (7), laquelle est reliée pour son support en au moins deux endroits à un châssis porteur (31), au moins une de ces connexions comportant un élément élastique (32) qui permet un mouvement relatif limité entre le châssis porteur (31) et la partie de la barre de coupe (7) qui est contigüe à la connexion, l'élément élastique (32) étant muni de matériau en forme de plaque s'étendant dans un plan sensiblement vertical situé dans le sens de marche du travail pour permettre des mouvements de la barre de coupe (7) par rapport au châssis porteur (31) dans un plan sensiblement vertical transversalement au sens de marche du travail,
**caractérisée** en ce que l'élément élastique (32) effectue la connexion par l'intermédiaire d'un organe faucheur (8) disposé sur la barre de coupe (7).

2. Machine faucheuse selon la revendication 1, caractérisée en ce que la barre de coupe (7) est reliée au châssis porteur (31) en deux endroits par l'intermédiaire d'organes faucheurs (8) de la barre de coupe (7) différents, de préférence les deux organes faucheurs situés le plus à l'extérieur.

3. Machine faucheuse selon l'une quelconque des revendications précédentes, caractérisée en ce qu'un ou plusieurs organes faucheurs (8) comporte/comportent un guide-récolte (10) en forme générale de tambour, et en ce qu'une connexion entre la barre de coupe (7) et le châssis porteur (31) s'étend par l'intermédiaire d'un guide-récolte (10) ou à travers celui-ci.

4. Machine faucheuse selon l'une quelconque des revendications précédentes, caractérisée en ce que l'élément élastique (32) consiste en une plaque de métal, de préférence un ressort à lame ayant une épaisseur de 3 à 4 mm, qui est relié près de son bord supérieur au châssis porteur (31) et près de son bord inférieur à des organes attachés à la barre de coupe.

5. Machine faucheuse selon l'une quelconque des revendications précédentes, caractérisée en ce que l'élément élastique (32) qui est relié près de son extrémité supérieure au châssis porteur (31) est relié, près de son extrémité inférieure, à un organe de support stationnaire (36) disposé à l'intérieur d'un guide-récolte (10) rotatif et est relié à l'organe faucheur (8) pertinent de telle manière qu'il est supporté de manière rotative par rapport à celui-ci.

6. Machine faucheuse selon la revendication 5, caractérisée en ce que l'organe de support (36) est muni d'un couvercle (40) disposé substantiellement sur le guide-récolte (10) en forme de tambour, lequel couvercle (40) a une ouverture centrale (41) à travers laquelle s'étend l'élément élastique (32).

7. Machine faucheuse selon la revendication 6, caractérisée en ce qu'un manchon flexible (42) s'étend entre le couvercle (40) et le châssis porteur (31), l'élément élastique (32) et/ou son ou ses moyens de connexion (33, 34) s'étendant à l'intérieur de ce manchon.

8. Machine faucheuse selon l'une quelconque des revendications précédentes, caractérisée en ce que le châssis porteur (31) est relié à un organe faucheur (8) par l'intermédiaire d'un pivot (43; 59) dont l'axe de pivot s'étend sensiblement horizontalement dans le sens de marche du travail de la machine faucheuse.

9. Machine faucheuse selon la revendication 8, caractérisée en ce que les organes faucheurs (8) sont interconnectés dans leur entraînement par l'intermédiaire de la barre de coupe (7) et sont entraînés au moyen d'un arbre d'entraînement (46, 48) relié de préférence à un organe faucheur (8) situé le plus à l'extérieur, lequel arbre d'entraînement (46, 48) est situé, au moins partiellement, à l'intérieur d'un guide-récolte (10) en forme générale de tambour, disposé sur l'organe faucheur (8) pertinent.

10. Machine faucheuse selon la revendication 9, caractérisée en ce que le châssis porteur (31) est relié par l'intermédiaire du pivot (43; 59) à l'organe faucheur (8) qui est entraîné par l'arbre d'entraînement (46, 48).

11. Machine faucheuse selon la revendication 10, caractérisée en ce que l'arbre d'entraînement (46, 48) est muni d'un accouplement flexible (50), de préférence un accouplement à chaîne ou un joint homocinétique, dans la région de l'axe de pivotement.

12. Machine faucheuse selon la revendication 11, caractérisée en ce que l'arbre d'entraînement (46, 48) est supporté dans des paliers au dessus de l'accouplement flexible (50) dans une partie qui est reliée rigidement au châssis porteur (31), et en ce que l'arbre d'entraînement (46, 48) est supporté dans des paliers en dessous de l'accouplement flexible (50) dans un organe à pivot (44) qui peut pivoter autour de l'axe de pivotement par rapport au châssis porteur (31).

13. Machine faucheuse selon la revendication 12, caractérisée en ce que l'organe à pivot (44) est situé au moins partiellement à l'intérieur d'un guide-récolte (10) en forme générale de tambour disposé sur l'organe faucheur (8) pertinent et est équipé d'un couvercle (51) situé au dessus du guide-récolte (10) en forme de tambour.

14. Machine faucheuse selon la revendication 8, 9 ou 10, caractérisée en ce que l'arbre d'entraînement est supporté dans un organe (58) en forme de manchon, auquel le châssis porteur (31) est relié par l'intermédiaire du pivot (59), lequel organe (58) en forme de manchon est en outre relié rigidement à un boîtier (61) du système de transmission, à partir duquel boîtier l'entraînement des organes faucheurs (8) est effectué par l'intermédiaire de l'arbre d'entraînement.

15. Machine faucheuse selon la revendication 14, caractérisée en ce que l'arbre d'entrée (63) du système de transmission est entraîné au moyen d'une ou de plusieurs courroies (64).

16. Machine faucheuse selon l'une quelconque des revendications précédentes, caractérisée en ce que le châssis porteur (31) est suspendu à un châssis (3) par l'intermédiaire duquel la machine faucheuse est attelée à un tracteur.

17. Machine faucheuse selon l'une quelconque des revendications précédentes, caractérisée en ce que le châssis porteur (31) est suspendu à un châssis (3) qui est muni de roues (4).

18. Machine faucheuse selon la revendication 16 ou 17, caractérisée en ce qu'elle coopère avec un dispositif tasseur (12) suspendu au châssis (3).
